# EUROPÄISCHE PATENTSCHRIFT

(11) **EP 0 944 504 B1**
(45) Veröffentlichungstag und Bekanntmachung des Hinweises auf die Patenterteilung: **28.07.2004**
(21) Anmeldenummer: 97954438.4
(22) Anmeldetag: 19.12.1997
(51) Int. Cl.: B60R 21/26

(54) **HYBRID-GASGENERATOR FÜR EINEN AIRBAG**
HYBRID GAS GENERATOR FOR AIRBAG
GENERATEUR DE GAZ HYBRIDE POUR UN AIRBAG

(30) Priorität: 21.12.1996 DE 19653783
(43) Veröffentlichungstag der Anmeldung: 29.09.1999
(73) Patentinhaber: Dynamit Nobel GmbH Explosivstoff- und Systemtechnik, 53840 Troisdorf (DE)
(72) Erfinder: ALBRECHT, Uwe, D-90478 Nürnberg (DE); BRETFELD, Anton, D-90765 Fürth (DE); KRAFT, Josef, D-92348 Berg (DE); ZHANG, Jiang, D-90419 Nürnberg (DE)
(74) Vertreter: Scherzberg, Andreas, Dr.
(86) Internationale Anmeldenummer: PCT/EP1997/007165
(87) Internationale Veröffentlichungsnummer: WO 1998/028169

(56) Entgegenhaltungen:
- EP-A- 0 639 483
- EP-A- 0 715 994
- EP-B- 0 616 578
- US-A- 5 242 194
- US-A- 5 345 876
- US-A- 5 462 307
- US-A- 5 582 426

## Beschreibung

Die Erfindung betrifft einen Hybrid-Gasgenerator für einen Airbag.

Aus EP 0 616 578 B1 ist ein Hybrid-Gasgenerator bekannt, der eine gaserzeugende Feststoffladung und ein Speichergas enthält. Im Auslösefall wird die Feststoffladung durch ein Anzündelement angezündet. Dadurch wird ein Schiebekolben in Richtung auf die Speicherkammer vorgetrieben. Der Schiebekolben enthält eine erste Berstscheibe und das Schließelement der Speicherkammer stellt eine zweite Berstscheibe dar. Nach dem Anzünden der Feststoffladung soll die die Speicherkammer verschließende zweite Berstscheibe zuerst zerstört werden, so daß kaltes Gas in den Airbag gelangt. Durch den sich weiter aufbauenden Druck in der Brennkammer soll danach die zweite Berstscheibe zerstört werden, so daß Heißgas in die Speicherkammer eindringt und das dort noch vorhandene Speichergas erwärmt. Die ordnungsgemäße Funktion dieses Gasgenerators hängt von dem Berstverhalten der beiden Berstscheiben ab. Insbesondere die an dem Schiebekolben vorgesehene Berstscheibe muss bei einem genau definierten Druck zerstört werden. Die am Schiebekolben vorgesehene Berstscheibe muss in Abhängigkeit von dem Druck der Brenngase öffnen, während die die Speicherkammer verschließende Berstscheibe in Abhängigkeit von dem Weg des Schiebekolbens zerstört wird. Diese unterschiedlichen Abhängigkeiten haben zur Folge, dass das Druckaufbauverhalten des Gaserzeugers erheblichen Exemplarstreuungen unterworfen sein kann. Die Charakteristik des Druckanstiegs in der Brennkammer bzw. die Abbrandcharakteristik muss sorgfältig an die Festigkeit der Sollbruchstellen der Berstscheiben angepasst werden, so dass die Herstellung des Gasgenerators sehr hohe Genauigkeiten erfordert.

Die EP-A2-0 715 994 beschreibt einen Hybrid-Gasgenerator für Sicherheitssysteme in Kraftfahrzeugen, insbesondere Airbag- und Gurtstraffersysteme. Hierbei ist ein bewegbarer Hohlkolben zum Zerstören der den Druckgasbehälter verschließenden Berstmembran vorgesehen. Dieser Hohlkolben wird durch Zündung eines Treibsatzes aus einer mittels Abschermitteln fixierten ersten Position in Richtung auf die Berstmembran bewegt, so dass nach Durchstoßen der Berstmembran die Bewegung des Hohlkolbens aufgrund von Hubbegrenzungsmitteln beendet wird. Nach dem Durchstoßen dieser Berstmembran wird eine weitere den Hohlkolben auf der dem Treibsatz zugewandten Seite verschließenden Berstmembran zerstört, so dass nunmehr auch die von dem Treibsatz erzeugten heißen Treibgase in den Hohlzylinder strömen können. Bei diesem Hybrid-Gasgenerator strömt zuerst kaltes Druckgas aus, bevor heißes Treibgas nachströmen kann.

In der gattungsgemäßen US 5,345,876 wird ein Hybrid-Gasgenerator für einen Airbag beschrieben. Dieser enthält eine Kartusche (Anzündelement) mit einer anzündbaren ersten gaserzeugenden Feststoffladung Zusätzlich ist eine-zweite gaserzeugende Feststoffladung vorhanden. Ferner ist eine durch ein Schließetement verschlossene, ein Speichergas enthaltende Speicherkammer vorgesehen und ein durch die Umsetzungsgase der Feststoffladung in Richtung auf das Schließelement bewegbaren und dieses aufstoßender Schieber vorhanden. Bei der Anzündung des Anzündelements tritt zuerst kaltes Gas aus und anschließend erst ein Gemisch aus kaltem und heißem Gas.

Der Erfindung liegt die Aufgabe zugrunde, einen Hybrid-Gasgenerator zu schaffen, der bei einfachem Aufbau ein sicheres und reproduzierbares Betriebsverhalten aufweist und daher für eine einfache und kostengünstige Massenfertigung geeignet ist.

Die Lösung dieser Aufgabe erfolgt erfindungsgemäß mit den im Patentanspruch 1 angegebenen Merkmalen.

Bei dem erfindungsgemäßen Gasgenerator (wie auch bei dem gattungsgemäßen Gasgenerator) erfolgt der Auslass der Brenngase und auch der Auslass des Speichergases in Abhängigkeit von dem Weg des Schiebers. Da beide Gase also in Abhängigkeit vom Weg desselben Organs (Schiebers) gesteuert sind, steht ein exaktes und reproduzierbares Betriebsverhalten, das weitgehend unabhängig ist von der Druckaufbaucharakteristik der jeweiligen Feststoffladung. Insbesondere kann durch geeignete Wahl der Längenabmessungen des Schiebers, der Umströmungszone und der Länge des Schieberweges der zeitliche Verlauf des Druckaufbaus festgelegt werden. Durch die Konstruktion und den geometrischen Zwang kann gewährleistet werden, daß zuerst kaltes Speichergas aus dem Hybrid-Gasgenerator ausströmt, und daß erst danach das Gemisch aus dem kalten Speichergas und dem heißen Umsetzungsgas ausströmt. Vorteile dieser Reihenfolge sind: eine reduzierte thermische Belastung des Airbags durch Gase und ein geringerer Gasdruck in der Speicherkammer bei Einströmung des Umsetzungsgases.

Erfindungsgemäß ist vorgesehen, daß die Kartusche einen die Stirnwand axial überragenden Haltebund aufweist, der um einen Rand des Schiebers umgebogen ist. Hierdurch dient die Stirnwand einerseits als Begrenzung der Kartusche und andererseits als Träger des rohrförmigen Schiebers. Dadurch besteht die Möglichkeit einer einfachen und kostengünstigen Massenfertigung und einer separat einbaubaren pyrotechnischen Kartusche. Alternativ kann der rohrförmige Schieber auch einstückiger Bestandteil der Kartusche sein.

Gemäß einer bevorzugten Weiterbildung der Erfindung ermöglicht eine konische Strecke am Schieber eine sanfte Abbremsung des Schiebers in der Endstellung und durch den Selbsthemmungseffekt eine definierte Endstellung des Schiebers.

Im folgenden werden unter Bezugnahme auf die Zeichnungen Ausführungsbeispiele der Erfindung näher erläutert.

Es zeigen:
- Fig. 1: einen Längsschnitt durch den Hybrid-Gasgenerator mit den wesentlichen Komponenten vor der Auslösung,
- Fig. 2: in vergrößertem Maßstab eine Einzelheit von Fig. 1 mit dem Schieber in der Ausgangsstellung,
- Fig. 3: den Schieber in einer Zwischenstellung mit von der Kartusche abgerissener Stirnwand und zerstörtem Schließelement der Speicherkammer, wobei das Umsetzungsgas noch in dem Führungskanal eingeschlossen ist,
- Fig. 4: den Schieber in seiner Endstellung nach Freigabe des Umsetzungsgases,
- Fig. 5: die Befestigung des Schiebers an der Kartusche durch Bördeln und
- Fig. 6: eine andere Ausführungsform des an der Kartusche befestigten Schiebers.

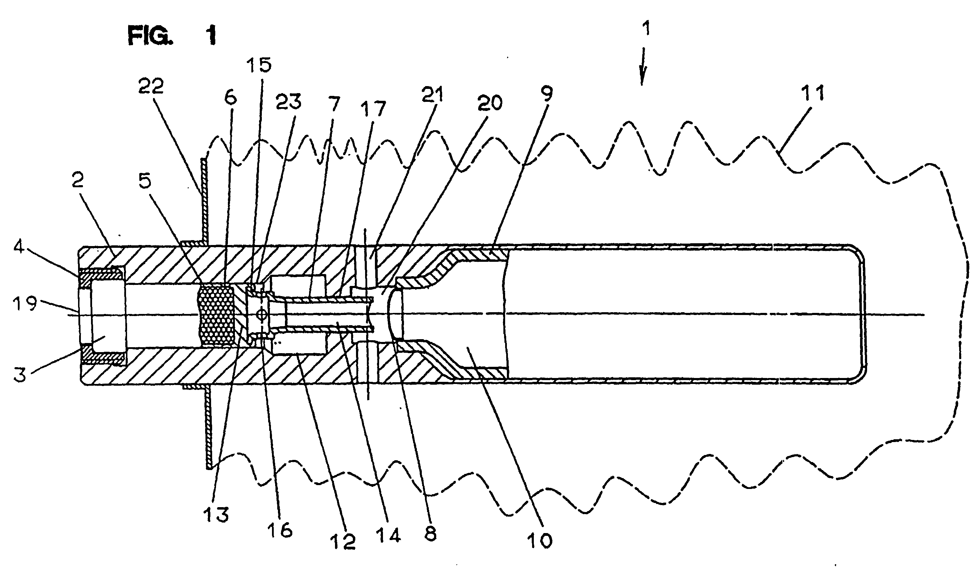

Gemäß Fig. 1 ist der Hybrid-Gasgenerator 1 in einen Airbag 11 eingebaut. Er weist ein zylinderförmiges Gehäuse 2 auf, in das eine Speicherkammer 9 für Gas 10 eingesetzt ist. Die Speicherkammer 9 ist an ihrer Öffnungsseite mit einem Schließelement 8 aus einer Berstscheibe bzw. einer Öffnungsmembran verschlossen. Gegenüber diesem Schließelement ist eine pyrotechnische Kartusche 3 angeordnet, die eng passend in einen zylindrischen Führungskanal 23 eingeschoben ist und in dem Gehäuse 2 durch eine Verschlußmutter 4 gegen Herausdrükken gesichert ist. In der Kartusche 3 befindet sich außer einer anzündbaren gaserzeugenden Feststoffladung 5 ein (nicht dargestelltes) Anzündelement. Über einen Stecker, der an die Buchse 19 angeschlossen wird, kann das Anzündelement elektrisch initiiert und damit die Feststoffladung angezündet werden. Die Kartusche 3 ist vorzugsweise aus Aluminium und z.B. durch Umformvorgänge, wie Fließpressen, Pressen und Rollen, kostengünstig hergestellt.

An der Stirnseite der Kartusche 3 ist eine abtrennbare Stirnwand 13 angeordnet. An dieser Stirnwand ist der rohrförmige Schieber 7 befestigt, der in einer Schieberführung 17 des Gehäuses 2 geführt ist. Damit die Stirnwand 13 von dem übrigen Körper der Kartusche 3 abtrennbar ist, ist an der Umfangswand der Kartusche 3 eine umlaufende Kerbe 6 als Sollbruchstelle eingebracht. Zur Befestigung des Schiebers 7 an der Kartusche 3 weist die Umfangswand der Kartusche 3 einen die Stirnwand 13 axial überragenden Haltebund 15 auf. Der Schieber 7 ist mit seinem der Stirnwand 13 zugewandten Ende zwischen der Stirnwand 13 und dem Haltebund 15 eingebettet. Die Stirnwand 13 ist massiv und ohne Sollbruchstelle ausgebildet. Sie reißt insgesamt an der Kerbe 6 ab, wenn der Druck in der Kartusche 3 ansteigt.

Der rohrförmige Schieber 7 ist bei dem ersten Ausführungsbeispiel durch Tiefziehen oder andere Verformung eines Blechrohres hergestellt. Er ist an beiden stirnseitigen Enden offen, wobei das der Kartusche 3 zugewandte Ende allerdings durch die Stirnwand 13 nachträglich verschlossen ist. In der Umfangswand des Schiebers 7 sind Öffnungen 16 für den Eintritt der Umsetzungsgase in den Schieber vorgesehen.

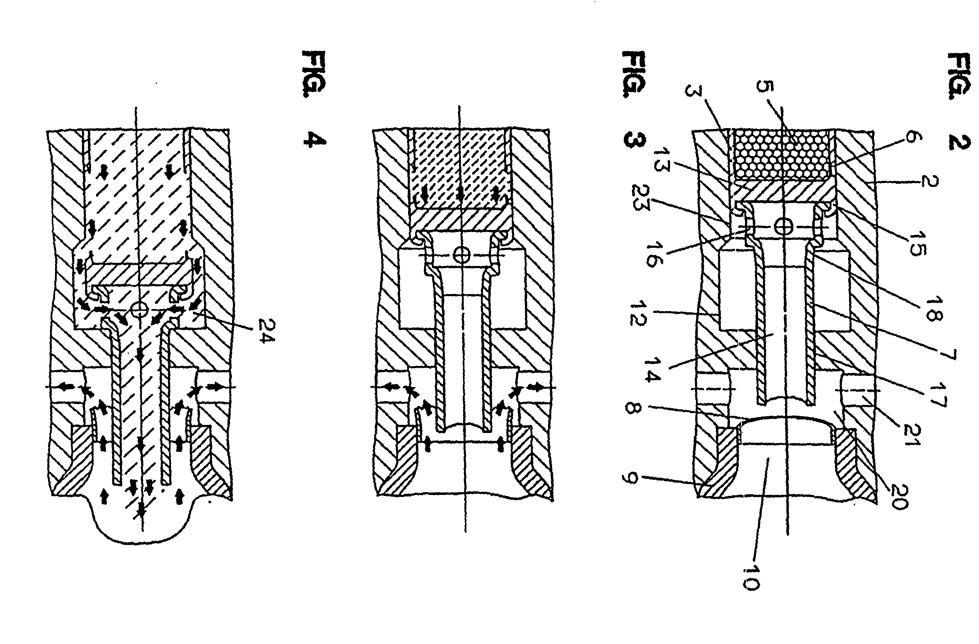

Der Führungskanal 23 dient einerseits zur Aufnahme des wesentlichen Teils der Länge der Kartusche 3 und er ist gemäß Fign. 1 und 2 über die Stirnwand 13 der Kartusche hinaus verlängert. Die Stirnwand 13 sitzt nach Art eines Kolbens in dem Führungskanal 23. An den Führungskanal 23 schließt sich eine Umströmungszone 12 von erweitertem Querschnitt an. Gelangt die Stirnwand 13 in den Bereich der Umströmungszone 12, so kann sie von den Umsetzungsgasen umströmt werden, so daß diese in die seitlichen Öffnungen 16 des Schiebers 7 eindringen können.

Die Umströmungszone 12 wird von der Schieberführung 17 begrenzt, in der der Schieber 7 im wesentlichen abdichtend geführt ist. Der Schieber ragt durch die Schieberführung 17 hindurch in den Austrittsraum 20, der durch Austrittsöffnungen 21 mit dem Airbag 11 verbunden ist. Die Umströmungszone 12 bildet also eine geschlossene Kammer, die durch die Stirnwand 13 abdichtend begrenzt wird und die nur über das Innere des Schiebers 7 mit dem Austrittsraum 20 verbunden ist.

Der Funktionsablauf des Hybrid-Gasgenerators wird nachfolgend unter Bezugnahme auf die Fign. 2-4 beschrieben.

Der Erfindung liegt bezüglich der Funktion der Gedanke zugrunde, daß nach Initiierung der Feststoffladung zuerst kaltes Speichergas 10 aus den Austrittsöffnungen 21 des Gasgenerators ausströmen soll. Erst dann soll das heiße Umsetzungsgas bzw. das Gemisch aus kaltem Speichergas und heißem Umsetzungsgas folgen. Die Vorteile eines so gestalteten Ausströmvorganges sind: Vermeidung einer starken Erhöhung des Gasdruckes im Speichergasraum infolge zu früher Einströmung des Umsetzungsgases sowie Verminderung der thermischen Belastung des Airbags durch hohe Gastemperatur.

Die Kartusche 3 kann elektrisch oder mechanisch angezündet werden. Die Anzünd- und Abbrandcharakteristik ist so eingestellt, daß in der Kartusche ein definierter Gasdruckanstieg erreicht wird. Der steigende Gasdruck trennt die Stirnwand 13 durch Aufreißen an der Kerbe 6 von der restlichen Hülse ab und beschleunigt die Stirnwand 13 mit dem daran befestigten Schieber 7 in Richtung auf das Schließorgan 8 der Speicherkammer 9. Der Schieber durchstößt dabei das Schließelement 8, das so ausgelegt ist, daß es nach dem Durchstoßen und unter der Wirkung des Gasdrucks des Speichergases 10 sofort fast vollständig zerstört wird, so daß die entstehende Öffnung größer ist als der Außendurchmesser des Schiebers. Das Speichergas 10 kann also trotz des in den Speichergasbehälter eingedrungenen Schiebers in den Austrittsraum 20 strömen.

Die axiale Position der Umströmungszone 12 ist mit der geometrischen Lage des Durchstoßens des Schließelements 8 durch den Schieber 7 so abgestimmt, daß das Durchstoßen zuerst geschieht, bevor der Schieber mit der damit verbundenen Stirnwand 13 den Führungskanal 23 verläßt (Fig. 3). Solange der Schieber 7 mit der damit verbundenen Stirnwand 13 durch den Führungskanal 23 geführt wird, bleibt das Umsetzungsgas eingeschlossen. Eine Durchströmung des Umsetzungsgases durch den Schieber wird verhindert. Durch diesen geometrischen Zwang wird somit erreicht, daß zuerst kaltes Speichergas 10 aus dem Gasgenerator entweicht.

Nach dem Durchstoßen des Schließelements 8 dringt der Schieber weiter in die Speicherkammer 9 ein. Erst in der Endphase der Schieberbewegung verläßt der Schieber 7 mit der damit verbundenen Stirnwand 13 den Führungskanal 23. Nach Erreichen der Umströmungszone 12 bzw. in der Endstellung des Schiebers (Fig. 4) strömt das bis dahin eingeschlossene heiße Umsetzungsgas durch den Strömungsweg 24 der Umströmungszone 12, die radialen Öffnungen 16 und den Hohlraum 14 des Schiebers in die Speicherkammer 9. Das Umsetzungsgas mischt sich mit dem restlichen noch in der Speicherkammer 9 befindlichen Speichergas 10 und strömt gemeinsam mit dem Speichergas durch die Austrittsöffnungen 21 aus. Der Schieber 7 besitzt eine konische Strecke 18. In der Endstellung gemäß Fig. 4 wird der Schieber aufgrund eines radialen Übermaßes der Strecke 18 in die zylindrische Kolbenführung 17 eingepreßt. Es entsteht eine Preßpassung. Die konische Strecke 18 erfüllt somit zwei Aufgaben: der Schieber wird bei Erreichen der Endstellung sanft abgebremst (d.h. der Aufprall wird gedämpft) und der Schieber wird aufgrund der starken Selbsthemmung am Zurückbewegen in Richtung auf die Kartusche 3 gehindert. Die definierte Endstellung des Schiebers begünstigt eine gute Mischung des Umsetzungsgases mit dem Speichergas 10 und mindert die Streuung des Ausströmvorganges bzw. der Ausgangsleistung des Gasgenerators.

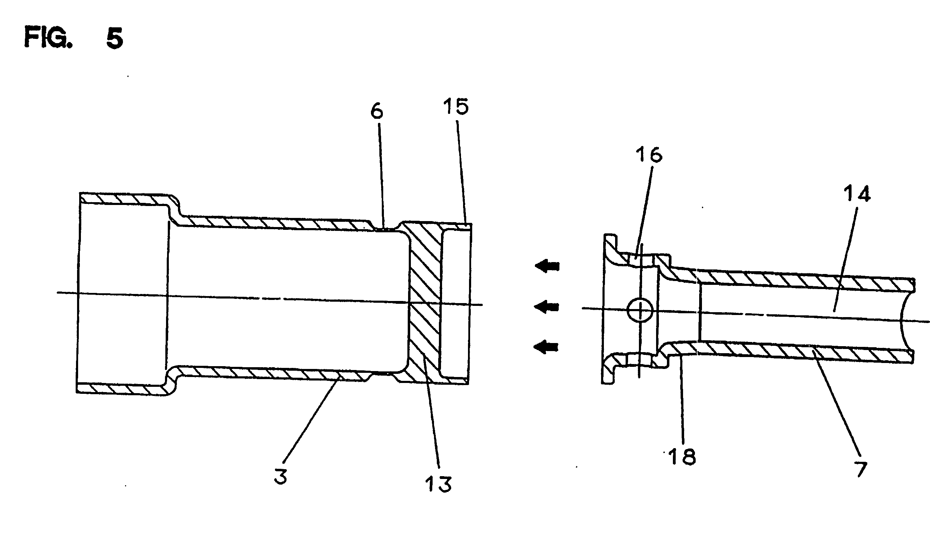

Fig. 5 zeigt das Zusammenfügen von Kartusche 3 und Schieber 7. Die Kartusche 3 weist einen über die Stirnwand 13 überstehenden Haltebund 15 auf, der um den Rand des Schiebers 7 herum umgebördelt werden kann.

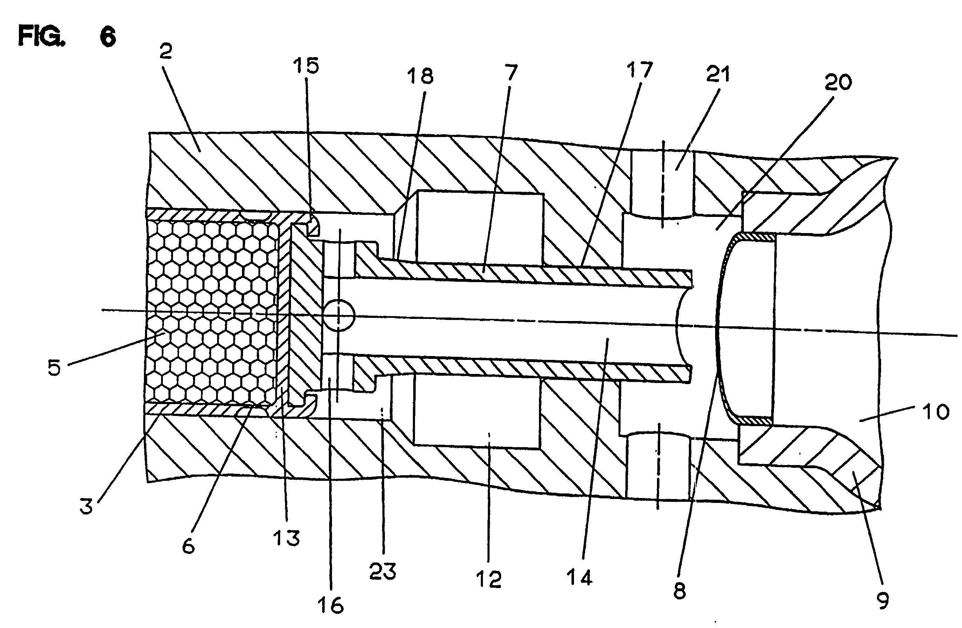

In Fig. 6 ist eine geringfügig modizifierte Form des Schiebers 7 dargestellt. Der Schieber 7 weist hier eine das kartuschenseitige Ende verschließende Wand auf, die mit einem nach außen abstehenden Flansch versehen ist, welcher von dem Haltebund 15 der Kartusche 3 übergriffen wird.

## Patentansprüche

1. Hybrid-Gasgenerator für einen Airbag (11 ), mit einer in einem Führungskanal (23) angeordneten Kartusche (3), die eine anzündbare gaserzeugende Feststoffladung (5) enthält, einer durch ein Schließelement (8) verschlossenen, ein Speichergas (10) enthaltenden Speicherkammer (9) und einem durch die Umsetzungsgase der Feststoffladung (5) in Richtung auf das Schließelement (8) bewegbaren und dieses aufstoßenden rohrförmigen an seinem stirnseitigen Ende offenen, rohrförmigen Schieber (7), wobei die Kartusche (3) eine mit dem schieber (7) verbundene Stirnwand (13) aufweist, die nach Erzeugung der Umsetzungsgase der Feststoffladung in eine Umströmungszöne (12) größeren Querschnitts vordringt, und wobei der Schieber (7) mindestens eine seitliche Öffnung (16) aufweist, durch die die Umsetzungsgase aus der Umströmungszone (12) in den Schieber (7) einströmen, wobei die Umströmungszone (12) derart angeordnet ist, dass sie von der Stirnwand (13) der Kartusche (3) erst erreicht wird, nachdem der Schieber (7) das Schließelement (8) aufgestoßen hat **dadurch gekennzeichnet dass**, die Stirnwand (13) von dem übrigen körper der Kartusche (3) durch die Umsetzungsgase der Feststoffladung abreißbar ist und **dass** die Kartusche (3) einen die Stirnwand (13) axial überragenden Haltebund (15) aufweist, der um einen Rand des Schiebers (7) umgebogen ist.

2. Hybrid-Gasgenerator nach Anspruch 1, **dadurch gekennzeichnet, dass** der Schieber (7) eine konische Strecke (18) zum Abbremsen der Schieberbewegung beim Eindringen in eine Schieberführung (17) aufweist.

## Claims

1. Hybrid gas generator for an air bag (11), having a cartridge (3) arranged in a guide channel (23) and containing an ignitable, gas-generating solid charge (5), a storage chamber (9) closed by a closing element (8) and containing a storage gas (10), and a tubular sliding element (7) that is open at its end face, can be moved by the reaction gases of the solid charge (5) in the direction of the closing element (8) and pushes open the closing element (8), with the cartridge (3) having a front wall (13) which is connected to the sliding element (7), the front wall advancing, after the reaction gases of the solid charge have been generated, into a flow zone (12) of larger cross section, and with the sliding element (7) having at least one lateral opening (16) through which the reaction gases flow out of the flow zone (12) into the sliding element (7), with the flow zone (12) being arranged in such a way that it is only reached by the front wall (13) of the cartridge (3) after the sliding element (7) has pushed open the closing element (8), **characterised in that** the front wall (13) can be torn away from the rest of the body of the cartridge (3) by the reaction gases of the solid charge, and **in that** the cartridge (3) has a retaining band (15) that projects axially over the front wall (13) and is bent around an edge of the sliding element (7).

2. Hybrid gas generator according to claim 1, **characterized in that** the sliding element (7) has a conical section (18) for braking the sliding-element movement upon penetration into a sliding-element guide (17).

## Revendications

1. Générateur de gaz hybride pour coussin gonflable (11), comprenant une cartouche (3) qui est disposée dans un canal de guidage (23) et contient une charge solide (5) déclenchable de génération de gaz, une chambre d'accumulation (9) qui est fermée par un élément d'obturation (8) et contient un gaz d'accumulation (10), ainsi qu'un tiroir (7) tubulaire, ouvert à son extrémité frontale, qui peut être déplacé par les gaz de conversion de la charge solide (5) en direction de l'élément d'obturation (8), la cartouche (3) comportant une paroi frontale (13) liée au tiroir (7) qui, après production des gaz de conversion de la charge solide avance dans une zone de transfert (12) de section plus large, et le tiroir (7) présentant au moins une ouverture latérale (16), à travers laquelle les gaz de conversion passent de la zone de transfert (12) dans le tiroir (7), la zone de transfert (12) étant disposée de manière telle que celle-ci soit atteinte par la paroi frontale (13) de la cartouche (3) seulement après que le tiroir (7) a heurté l'élément d'obturation (8), **caractérisé par le fait que** la paroi frontale (13) peut être arrachée du reste du corps de la cartouche (3) par les gaz de conversion de la charge solide et que la cartouche (3) présente un collet de fixation (15) en saillie axialement par rapport à la paroi frontale qui est replié sur un bord du tiroir (7).

2. Générateur de gaz hybride selon la revendication 1, **caractérisé par le fait que** le tiroir (7) présente une portion conique (18) pour freiner le déplacement du tiroir dans sa pénétration dans un guide de tiroir (17).
